# EUROPEAN PATENT APPLICATION

(11) **EP 3 697 055 A1**
(43) Date of publication of application: **19.08.2020**
(21) Application number: 20157228.6
(22) Date of filing: 13.02.2020
(51) Int. Cl.: H04L 29/06, H04L 12/24

(54) **COMMAND HANDLING**

(30) Priority: 14.02.2019 US 201916276112
(71) Applicant: Nokia Solutions and Networks Oy, 02610 Espoo (FI)
(72) Inventor: Kotalwar, Jayant, Cupertino, California 95014 (US); Duraisamy, Suresh, Sunnyvale, California 94089 (US)
(74) Representative: Bryers LLP

(57) **Abstract**

Various example embodiments for supporting command handling are presented. In at least some example embodiments, the command handling may include command authorization and, optionally, command accounting. In at least some example embodiments, command handling at a router may be performed by detecting a command entered via a terminal running on the router and initiating a process for authorization and, optionally, accounting, of the command. In at least some example embodiments, command handling for a router may include receiving, by a management element, a command entered via a terminal running on a router, determining, by the management element, whether execution of the command on the router is authorized, and providing, by the management element, an indication as to whether execution of the command on the router is authorized. The terminal may be a Linux terminal and the associated command may be a Linux command.

## Description

### TECHNICAL FIELD

Various example embodiments relate generally to communication systems, more particularly but not exclusively, to router management in communication systems.

### BACKGROUND

Routers may be used in various environments, such as communication networks, datacenter networks, or the like. Routers may be managed, based on various router management techniques, for managing various aspects of routers, such as configuration of routers, monitoring of routers, maintenance of routers, and so forth.

### SUMMARY

In at least some example embodiments, an apparatus includes at least one processor and at least one memory including computer program code, wherein the at least one memory and the computer program code are configured to, with the at least one processor, cause the apparatus to at least detect, at a router, a command entered via a terminal running on the router and initiate, at the router, a process for authorization of the command. In at least some example embodiments, the command is detected based on monitoring for the command responsive to entry of the terminal from a command-line interface of the router. In at least some example embodiments, the command is detected based on a terminal profile created at the router responsive to entry of the terminal from a command-line interface of the router. In at least some example embodiments, the at least one memory and the computer program code are configured to, with the at least one processor, cause the apparatus to at least activate, at the router based on entry of the terminal from a command-line interface of the router, a command monitoring mode in which the router is configured to monitor for commands. In at least some example embodiments, the terminal is a Linux terminal and the command is a Linux command. In at least some example embodiments, the Linux terminal is a BASH terminal. In at least some example embodiments, the command is a system level command, wherein the command is detected based on a command tracing function. In at least some example embodiments, the command does not require system level execution, wherein the command is detected based on a command tracking function. In at least some example embodiments, to initiate the process for authorization of the command, the at least one memory and the computer program code are configured to, with the at least one processor, cause the apparatus to at least send, by the router toward a management element, the command for authorization of the command by the management element. In at least some example embodiments, to initiate the process for authorization of the command, the at least one memory and the computer program code are configured to, with the at least one processor, cause the apparatus to at least send, by the router toward the management element in conjunction with the command, at least one of a user identifier of a user which entered the command, a user session identifier of a user session via which the command was entered, a terminal type of the terminal, or one or more arguments of the command. In at least some example embodiments, to send the command toward the management element, the at least one memory and the computer program code are configured to, with the at least one processor, cause the apparatus to at least provide the command to an authentication, authorization, and accounting (AAA) subsystem of the router that is configured to communicate with the management element for authorization of the command. In at least some example embodiments, the at least one memory and the computer program code are configured to, with the at least one processor, cause the apparatus to at least receive, by the router from the management element, an authorization response and determine, by the router based on the authorization response, whether to allow or deny execution of the command on the router. In at least some example embodiments, the at least one memory and the computer program code are configured to, with the at least one processor, cause the apparatus to at least receive, by the router from the management element, an authorization response including an indication that execution of the command on the router is authorized and initiate, by the router based on the indication that execution of the command on the router is authorized, execution of the command on the router. In at least some example embodiments, the at least one memory and the computer program code are configured to, with the at least one processor, cause the apparatus to at least provide, via the terminal, an indication that execution of the command on the router is complete. In at least some example embodiments, the at least one memory and the computer program code are configured to, with the at least one processor, cause the apparatus to at least receive, by the router from the management element, an authorization response including an indication that execution of the command on the router is not authorized and provide, via the terminal, an indication that execution of the command on the router is not authorized. In at least some example embodiments, the management element includes a local element of the router configured to perform authorization and accounting functions. In at least some example embodiments, the management element includes a remote server configured to perform command authorization and accounting functions. In at least some example embodiments, the remote server includes an authentication, authorization, and accounting (AAA) server. In at least some example embodiments, the router, for communiction with the remote server, is configured to support at least one of a Terminal Access Controller Access Control System (TACACS) protocol or a Remote Authentication Dial-In User Service (RADIUS) protocol.

In at least some example embodiments, a non-transitory computer-readable medium includes instructions configured to cause an apparatus to at least detect, at a router, a command entered via a terminal running on the router and initiate, at the router, a process for authorization of the command. In at least some example embodiments, the command is detected based on monitoring for the command responsive to entry of the terminal from a command-line interface of the router. In at least some example embodiments, the command is detected based on a terminal profile created at the router responsive to entry of the terminal from a command-line interface of the router. In at least some example embodiments, the non-transitory computer-readable medium includes instructions configured to cause the apparatus to at least activate, at the router based on entry of the terminal from a command-line interface of the router, a command monitoring mode in which the router is configured to monitor for commands. In at least some example embodiments, the terminal is a Linux terminal and the command is a Linux command. In at least some example embodiments, the Linux terminal is a BASH terminal. In at least some example embodiments, the command is a system level command, wherein the command is detected based on a command tracing function. In at least some example embodiments, the command does not require system level execution, wherein the command is detected based on a command tracking function. In at least some example embodiments, to initiate the process for authorization of the command, the non-transitory computer-readable medium includes instructions configured to cause the apparatus to at least send, by the router toward a management element, the command for authorization of the command by the management element. In at least some example embodiments, to initiate the process for authorization of the command, the non-transitory computer-readable medium includes instructions configured to cause the apparatus to at least send, by the router toward the management element in conjunction with the command, at least one of a user identifier of a user which entered the command, a user session identifier of a user session via which the command was entered, a terminal type of the terminal, or one or more arguments of the command. In at least some example embodiments, to send the command toward the management element, the non-transitory computer-readable medium includes instructions configured to cause the apparatus to at least provide the command to an authentication, authorization, and accounting (AAA) subsystem of the router that is configured to communicate with the management element for authorization of the command. In at least some example embodiments, the non-transitory computer-readable medium includes instructions configured to cause the apparatus to at least receive, by the router from the management element, an authorization response and determine, by the router based on the authorization response, whether to allow or deny execution of the command on the router. In at least some example embodiments, the non-transitory computer-readable medium includes instructions configured to cause the apparatus to at least receive, by the router from the management element, an authorization response including an indication that execution of the command on the router is authorized and initiate, by the router based on the indication that execution of the command on the router is authorized, execution of the command on the router. In at least some example embodiments, the non-transitory computer-readable medium includes instructions configured to cause the apparatus to at least provide, via the terminal, an indication that execution of the command on the router is complete. In at least some example embodiments, the non-transitory computer-readable medium includes instructions configured to cause the apparatus to at least receive, by the router from the management element, an authorization response including an indication that execution of the command on the router is not authorized and provide, via the terminal, an indication that execution of the command on the router is not authorized. In at least some example embodiments, the management element includes a local element of the router configured to perform authorization and accounting functions. In at least some example embodiments, the management element includes a remote server configured to perform command authorization and accounting functions. In at least some example embodiments, the remote server includes an authentication, authorization, and accounting (AAA) server. In at least some example embodiments, the router, for communiction with the remote server, is configured to support at least one of a Terminal Access Controller Access Control System (TACACS) protocol or a Remote Authentication Dial-In User Service (RADIUS) protocol.

In at least some example embodiments, a method includes detecting, at a router, a command entered via a terminal running on the router and initiating, at the router, a process for authorization of the command. In at least some example embodiments, the command is detected based on monitoring for the command responsive to entry of the terminal from a command-line interface of the router. In at least some example embodiments, the command is detected based on a terminal profile created at the router responsive to entry of the terminal from a command-line interface of the router. In at least some example embodiments, the method includes activating, at the router based on entry of the terminal from a command-line interface of the router, a command monitoring mode in which the router is configured to monitor for commands. In at least some example embodiments, the terminal is a Linux terminal and the command is a Linux command. In at least some example embodiments, the Linux terminal is a BASH terminal. In at least some example embodiments, the command is a system level command, wherein the command is detected based on a command tracing function. In at least some example embodiments, the command does not require system level execution, wherein the command is detected based on a command tracking function. In at least some example embodiments, inititing the process for authorization of the command includes sending, by the router toward a management element, the command for authorization of the command by the management element. In at least some example embodiments, initiating the process for authorization of the command includes sending, by the router toward the management element in conjunction with the command, at least one of a user identifier of a user which entered the command, a user session identifier of a user session via which the command was entered, a terminal type of the terminal, or one or more arguments of the command. In at least some example embodiments, sending the command toward the management element includes providing the command to an authentication, authorization, and accounting (AAA) subsystem of the router that is configured to communicate with the management element for authorization of the command. In at least some example embodiments, the method includes receiving, by the router from the management element, an authorization response and determining, by the router based on the authorization response, whether to allow or deny execution of the command on the router. In at least some example embodiments, the method includes receiving, by the router from the management element, an authorization response including an indication that execution of the command on the router is authorized and initiating, by the router based on the indication that execution of the command on the router is authorized, execution of the command on the router. In at least some example embodiments, the method includes providing, via the terminal, an indication that execution of the command on the router is complete. In at least some example embodiments, the method includes receiving, by the router from the management element, an authorization response including an indication that execution of the command on the router is not authorized and providing, via the terminal, an indication that execution of the command on the router is not authorized. In at least some example embodiments, the management element includes a local element of the router configured to perform authorization and accounting functions. In at least some example embodiments, the management element includes a remote server configured to perform command authorization and accounting functions. In at least some example embodiments, the remote server includes an authentication, authorization, and accounting (AAA) server. In at least some example embodiments, the router, for communiction with the remote server, is configured to support at least one of a Terminal Access Controller Access Control System (TACACS) protocol or a Remote Authentication Dial-In User Service (RADIUS) protocol.

In at least some example embodiments, an apparatus includes means for detecting, at a router, a command entered via a terminal running on the router and means for initiating, at the router, a process for authorization of the command. In at least some example embodiments, the command is detected based on monitoring for the command responsive to entry of the terminal from a command-line interface of the router. In at least some example embodiments, the command is detected based on a terminal profile created at the router responsive to entry of the terminal from a command-line interface of the router. In at least some example embodiments, the apparatus includes means for activating, at the router based on entry of the terminal from a command-line interface of the router, a command monitoring mode in which the router is configured to monitor for commands. In at least some example embodiments, the terminal is a Linux terminal and the command is a Linux command. In at least some example embodiments, the Linux terminal is a BASH terminal. In at least some example embodiments, the command is a system level command, wherein the command is detected based on a command tracing function. In at least some example embodiments, the command does not require system level execution, wherein the command is detected based on a command tracking function. In at least some example embodiments, the means for inititing the process for authorization of the command includes means for sending, by the router toward a management element, the command for authorization of the command by the management element. In at least some example embodiments, the means for initiating the process for authorization of the command includes means for sending, by the router toward the management element in conjunction with the command, at least one of a user identifier of a user which entered the command, a user session identifier of a user session via which the command was entered, a terminal type of the terminal, or one or more arguments of the command. In at least some example embodiments, the means for sending the command toward the management element includes means for providing the command to an authentication, authorization, and accounting (AAA) subsystem of the router that is configured to communicate with the management element for authorization of the command. In at least some example embodiments, the apparatus includes means for receiving, by the router from the management element, an authorization response and means for determining, by the router based on the authorization response, whether to allow or deny execution of the command on the router. In at least some example embodiments, the apparatus includes means for receiving, by the router from the management element, an authorization response including an indication that execution of the command on the router is authorized and means for initiating, by the router based on the indication that execution of the command on the router is authorized, execution of the command on the router. In at least some example embodiments, the apparatus includes means for providing, via the terminal, an indication that execution of the command on the router is complete. In at least some example embodiments, the apparatus includes means for receiving, by the router from the management element, an authorization response including an indication that execution of the command on the router is not authorized and means for providing, via the terminal, an indication that execution of the command on the router is not authorized. In at least some example embodiments, the management element includes a local element of the router configured to perform authorization and accounting functions. In at least some example embodiments, the management element includes a remote server configured to perform command authorization and accounting functions. In at least some example embodiments, the remote server includes an authentication, authorization, and accounting (AAA) server. In at least some example embodiments, the router, for communiction with the remote server, is configured to support at least one of a Terminal Access Controller Access Control System (TACACS) protocol or a Remote Authentication Dial-In User Service (RADIUS) protocol.

In at least some example embodiments, an apparatus includes at least one processor and at least one memory including computer program code, wherein the at least one memory and the computer program code are configured to, with the at least one processor, cause the apparatus to at least receive, by a management element, a command entered via a terminal running on a router, determine, by the management element, whether execution of the command on the router is authorized, and provide, by the management element, an indication as to whether execution of the command on the router is authorized. In at least some example embodiments, a non-transitory computer-readable medium includes instructions configured to cause an apparatus to at least receive, by a management element, a command entered via a terminal running on a router, determine, by the management element, whether execution of the command on the router is authorized, and provide, by the management element, an indication as to whether execution of the command on the router is authorized. In at least some example embodiments, a method includes receiving, by a management element, a command entered via a terminal running on a router, determining, by the management element, whether execution of the command on the router is authorized, and providing, by the management element, an indication as to whether execution of the command on the router is authorized. In at least some example embodiments, an apparatus includes means for receiving, by a management element, a command entered via a terminal running on a router, means for determining, by the management element, whether execution of the command on the router is authorized, and means for providing, by the management element, an indication as to whether execution of the command on the router is authorized. In at least some example embodiments, the command is detected at the router based on monitoring for the command responsive to entry of the terminal from a command-line interface of the router. In at least some example embodiments, the command is detected at the rourer based on a terminal profile created at the router responsive to entry of the terminal from a command-line interface of the router. In at least some example embodiments, the command is detected at the rourer based on activation, at the router based on entry of the terminal from a command-line interface of the router, a command monitoring mode in which the router is configured to monitor for commands. In at least some example embodiments, the terminal is a Linux terminal and the command is a Linux command. In at least some example embodiments, the Linux terminal is a BASH terminal. In at least some example embodiments, the command is a system level command, wherein the command is detected at the router based on a command tracing function. In at least some example embodiments, the command does not require system level execution, wherein the command is detected at the router based on a command tracking function. In at least some example embodiments, at least one of a user identifier of a user which entered the command, a user session identifier of a user session via which the command was entered, a terminal type of the terminal, or one or more arguments of the command is received in conjunction with the command. In at least some example embodiments, the command is received from an authentication, authorization, and accounting (AAA) subsystem of the router that is configured to communicate with the management element for authorization of the command. In at least some example embodiments, the management element includes a local element of the router configured to perform authorization and accounting functions. In at least some example embodiments, the management element includes a server configured to perform command authorization and accounting functions. In at least some example embodiments, the server includes an authentication, authorization, and accounting (AAA) server. In at least some example embodiments, the remote server, for communiction with the router, is configured to support at least one of a Terminal Access Controller Access Control System (TACACS) protocol or a Remote Authentication Dial-In User Service (RADIUS) protocol.

### BRIEF DESCRIPTION OF THE DRAWINGS

The teachings herein can be readily understood by considering the following detailed description in conjunction with the accompanying drawings, in which:
FIG. 1 depicts an example embodiment of a communication system including a communication network and a management device configured to manage the communication network;
FIG. 2 depicts an example embodiment of authorization and accounting of Linux commands for a router;
FIG. 3 depicts an example embodiment of authorization and accounting of Linux commands for a router;
FIG. 4 depicts an example embodiment of a method for use by a router to support handling of a command entered via the router;
FIG. 5 depicts an example embodiment of a method for use by a management element to support handling of a command entered via a router; and
FIG. 6 depicts an example embodiment of a computer suitable for use in performing various functions presented herein.

To facilitate understanding, identical reference numerals have been used, where possible, to designate identical elements that are common to the figures.

### DETAILED DESCRIPTION

Various example embodiments for supporting command handling are presented. In at least some example embodiments, the command handling may include command authorization and, optionally, command accounting. In at least some example embodiments, command handling at a router may be performed by detecting a command entered via a terminal running on the router and initiating a process for authorization and, optionally, accounting, of the command. In at least some example embodiments, command authorization at a router may be performed by detecting a command entered via a terminal running on the router and initiating a process for authorization of the command (e.g., authorization of execution of the command at the router, authorization of the user which entered the command to execute the command at the router, or the like, as well as various combinations thereof). In at least some example embodiments, command authorization and accounting at a router may be performed by detecting a command entered via a terminal running on the router and initiating a process for authorization and accounting of the command. In at least some example embodiments, the detection of a command entered via a terminal running on the router may be based on monitoring for commands entered via the terminal running on the router where the monitoring is initiated based on a determination by the router that the terminal was accessed via a command-line interface (CLI) of the router. In at least some example embodiments, the process for authorization of the command may include local authorization of the command locally on the router, remote authorization of the command by a remote server, or a combination thereof. In at least some example embodiments, the process for accounting of the command may include local accounting of the command locally on the router, remote accounting of the command by a remote server, or a combination thereof. In at least some example embodiments, the process for authorization and accounting of the command may include local authorization and accounting of the command locally on the router, remote authorization and accounting of the command by a remote server, or a combination thereof. In at least some example embodiments, command handling for a router may include receiving, by a management element, a command entered via a terminal running on a router, determining, by the management element, whether execution of the command on the router is authorized, and providing, by the management element, an indication as to whether execution of the command on the router is authorized. In at least some example embodiments, the management element may be co-located on the router or remote from the router (e.g., an authentication, authorization, and accounting (AAA) server or other suitable element). Various example embodiments for command handling presented herein may be configured to support command authorization and, optionally, accounting, for various terminal types and associated command types (although it is noted that various example embodiments presented herein are primarily presented within the context of authorization and accounting of specific types of Linux commands entered via a specific type of Linux interface: namely, bash commands entered via a bash interface). It will be appreciated that these and various other example embodiments and advantages or potential advantages of supporting command handling may be further understood by way of reference to the various figures, which are discussed further below.

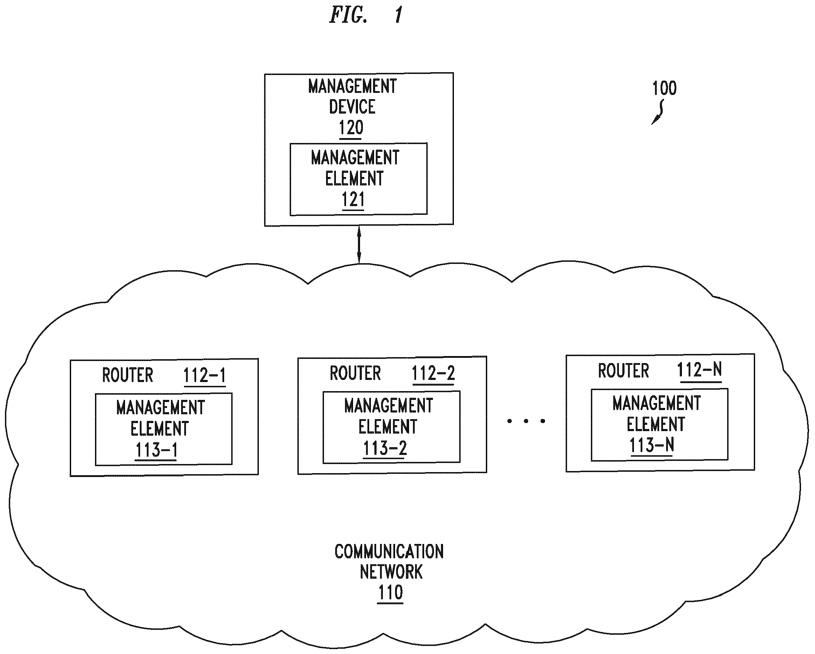

FIG. 1 depicts an example embodiment of a communication system including a communication network and a management device configured to manage the communication network.

The communication system 100, as indicated above, includes a communication network 110 and a management device 120 configured to manage the communication network 110.

The communication network 110 may include any network which may be managed by a management device 120. For example, the communication network 110 may be an operator network, an enterprise network, or the like. For example, the communication network 110 may be an access network, a core network, a backhaul network, a datacenter network, or the like. For example, the communication network 110 may be a physical communication network, a virtualized communication network (e.g., virtualized based on network function virtualization (NFV) techniques or other suitable virtualization techniques), or the like. It will be appreciated that, although primarily presented herein within the context of specific types of communication networks, various other types of communication networks may be supported.

The communication network 110 includes a set of routers 112-1 - 112-N (collectively, routers 112). The routers 112 may be configured to provide various communication services for supporting communications within communication network 110. The routers 112 may be arranged in various network topologies, which may depend on the type of communication network 110 in which the routers 112 are disposed. For example, the routers 112 may be arranged in a mesh topology (e.g., in a network operator backhaul network), in a spine-and-leaf topology (e.g., in a datacenter network), or the like. The routers 112 may be configured to be managed by the management device 120. It will be appreciated that, although primarily presented herein as including specific types devices (illustratively, routers 112), communication network 110 may include various other types of devices (e.g., switches, hubs, bridges, or the like, as well as various combinations thereof).

The management device 120 may be configured to support management of the communication network 110. The management device 120 may be configured to support management of the communication network 110 for various management purposes, at various management scales, or the like, as well as various combinations thereof. For example, the management device 120 may be configured to support configuration functions, monitoring functions, maintenance functions, or the like, as well as various combinations thereof. For example, the management device 120 may be configured to support service-level management (e.g., as a service management system or other similar system), network-level management (e.g., as a network management system (NMS) or other similar system), element-level management (e.g., as an element management system (EMS) or other similar system), or the like, as well as various combinations thereof. The management device 120 may be one of various types of devices which may be used to support management functions for communication network 110, such as a workstation of a management system configured to support management of the routers 112, a user device (e.g., a laptop, a tablet, a smartphone, or the like) configured to provide remote management access to the routers 112, a local console connected to one or more of the routers 112, or the like. It will be appreciated that the management device 120 may be configured to support various other management capabilities for managing the communication network 110.

The management device 120 is configured to manage the routers 112 of communication network 110. The management device 120 may support various capabilities which enable the management system 120 to access and manage routers 112 and, similarly, routers 112 may support various capabilities which enable access and management by the management device 120. For example, such capabilities may include management interfaces (e.g., command-line interfaces (CLIs), graphical user interfaces (GUIs), or the like), management applications (e.g., router configuration applications, router status retrieval applications, or the like), management elements (e.g., devices, modules, systems, sub-systems or the like), communications capabilities (e.g., inter-process communications capabilities such as remote procedure calls (RPCs), protocols such as telnet or secure shell (SSH), or the like), or the like, as well as various combinations thereof. It will be appreciated that these capabilities may be considered to be represented in FIG. 1 by the management elements 113-1 - 113-N on routers 112-1 - 112-N, respectively, and the management element 121 on management device 120.

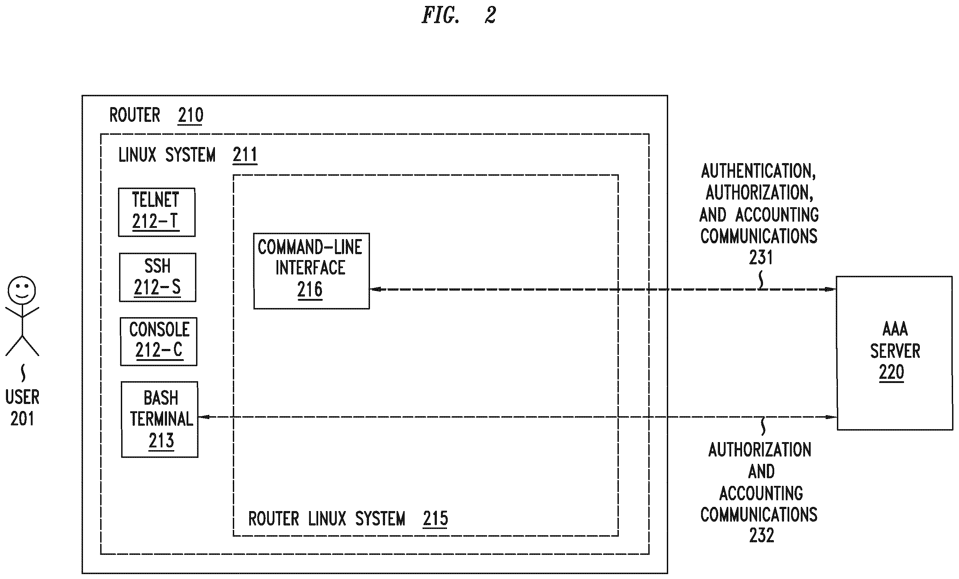

In at least some embodiments, for example, a router 112 of the managed environment 110 and the management device 120 may be configured to cooperate in order to provide a Linux command authorization and accounting capability. An example embodiment for providing a Linux command authorization and accounting capability is presented in FIG. 2.

It will be appreciated that, although primarily presented with respect to specific types, numbers, and arrangements of elements, communication system 100 may include various other types, numbers and arrangements of elements.

FIG. 2 depicts an example embodiment of authorization and accounting of Linux commands for a router.

As presented in FIG. 2, a user 201 is able to manage a router 210 in conjunction with use of an Authentication, Authorization, and Accounting (AAA) server 220. The router 210 is running a Linux system 211. The Linux system 211 on router 210 supports a number of router access capabilities 212 via which the user 201 may access the router 210 locally (illustratively, denoted as console 212-C) or remotely (illustratively, denoted as telnet 212-T and SSH 212-S). The Linux system 211 on router 210 also supports a bash terminal 213 via which the user 201 may execute bash commands on Linux system 211. The Linux system 211 is running a router Linux system 215 which is configured to provide the router service functions of the router 210 (e.g., traffic routing functions, traffic monitoring functions, or the like, as well as various combinations thereof). The router Linux system 215 of the router 210 supports a command-line interface (CLI) 216 via which the user 201 may interact with the router Linux system 215 for performing various functions on the router 210. The user 201 may access the CLI 216 via any of the router access capabilities 212. The AAA server 220 is configured to perform authentication, authorization, and accounting functions for router 210. The communication between the router 210 and the AAA server 220 may be based on use of any suitable AAA protocol (e.g., Remote Authentication Dial-In User Service (RADIUS), Terminal Access Controller Access-Control System (TACACS), or the like).

As presented in FIG. 2, router 210 is configured to support authentication, authorization, and accounting functions for commands entered by the user 201 via CLI 216 (as illustrated by AAA communications 231 depicted as being supported between the CLI 216 and the AAA server 220). The user 201 accesses the CLI 216 of the router 210 via console 212-C, telnet 212-T, or SSH 212-S. The user 201 is authenticated by the AAA server 220 before being permitted to execute commands on router Linux system 215 via the CLI 216. The user 201, after being authenticated by the AAA server 220 for operating on the router Linux system 215 via the CLI 216, may enter commands via the CLI 216. The commands entered by the user 201 via the CLI 216 are authorized and accounted by the AAA server 220. The router 210 sends a command entered by the user 201 via the CLI 216 to the AAA server 220 for authorization and accounting. The AAA server 220 receives the command from the router 210 and performs authorization and accounting for the command. For authorization, the AAA server 220 determines whether execution of the command on the router 210 is authorized and provides to the router 210 a response indicative as to whether execution of the command on the router 210 is authorized. The authorization of the command entered by the user 201 via the CLI 216 may be based on command authorization information provided by the router 210 to the AAA server 220 for use in determining whether execution of the command on the router 210 is authorized (e.g., the command, a user identifier of user 201, a user session identifier of a user session of user 201, a terminal type via which the user 201 accessed the CLI 216 (e.g., console, telnet, SSH, or the like), or the like, as well as various combinations thereof). The router 210, based on a response from the AAA server 220 that is indicative that the user 201 is authorized to execute the command, executes the command on the router 210 and may provide an indication to the user 201 via the CLI 216 that the command was executed (e.g., a result of execution of the command). The router 210, based on a response from the AAA server 220 that is indicative that the user 201 is not authorized to execute a command, prevents execution of the command on the router 210 and may provide an indication to the user 201 via the CLI 216 that the command was not executed due to lack of authorization. The AAA server 220 also performs accounting for the command entered by the user 201 via the CLI 216 for maintaining a record of user activity on the router 210 (e.g., commands entered, commands executed after being authorized, commands not execute after authorization was denied, and so forth), which may be used for various activity tracking purposes (e.g., auditing, analysis, or the like). The router 210 also may perform accounting for the command entered by the user 201 via the CLI 216 for maintaining a local record of user activity on the router 210.

As presented in FIG. 2, router 210 is configured to support authorization and accounting functions for Linux commands entered by the user 201 via bash terminal 213 (as illustrated by authorization and accounting communications 232 depicted as being supported between the bash terminal 213 and the AAA server 220). The user 201 may access the bash terminal 213 directly or may access (or drop into) the bash terminal 213 via the CLI 216 after being authenticated by the AAA server 220 via the CLI 216. For example, the user may enter the bash terminal 213 on the router 210 by entering "bash" via the CLI 216 of the router 210. The router 210 may be configured to support authorization and accounting of Linux commands entered via the bash terminal 213 when the user 201 enters the bash terminal 213 from the CLI 216. The router 210, based on a determination that the user enters the bash terminal 213 from the CLI 216, activates authorization and accounting for Linux commands entered via the bash terminal 213, including monitoring for Linux commands entered by the user 201 via the bash terminal 213 and initiating authorization and accounting for Linux commands entered by the user 201 via the bash terminal 213.

The router 210, based on a determination that the user 201 enters the bash terminal 213 from the CLI 216, activates authorization and accounting for Linux commands entered via the bash terminal 213, which includes monitoring for Linux commands entered by the user 201 via the bash terminal 213. The router 210 may activate monitoring for Linux commands entered by the user 201 via the bash terminal 213 based on a determination by the router 210 that the user 201 has entered the bash terminal 213 from the CLI 216. The router 210 may enter a Linux command monitoring mode based on the determination by the router 210 that the user 201 has entered the bash terminal 213 from the CLI 216. The router 210 may enter a Linux command monitoring mode for the particular user 201 that entered the bash terminal 213 from the CLI 216. The router 210 may enter a Linux command monitoring mode for the particular user 201 that entered the bash terminal 213 from the CLI 216 based on use of a user profile maintained by the router 210 for the user 201 after the user is authenticated to access router 210 (e.g., updating a user profile of the user 201 with an indication that the Linux command monitoring mode is active for the user 201 such that Linux command monitoring is to be performed for the user 201). The router 210 may be configured to monitor for various types of Linux commands based on various command monitoring capabilities (e.g., monitoring for system level commands based on a command tracing function, monitoring for commands that do not require system level execution based on a command tracking function, or the like, as well as various combinatinos thereof). The router 210, based on detection of a Linux command entered by the user 201 via the bash terminal 213, initiating authorization and accounting for the Linux command.

The router 210, based on a determination that the user 201 enters the bash terminal 213 from the CLI 216, activates authorization and accounting for Linux commands entered via the bash terminal 213, which includes initiating authorization and accounting for Linux commands entered by the user 201 via the bash terminal 213. The router 210 detects a Linux command entered by the user 201 via the bash terminal 213. The Linux command entered by the user 201 via the bash terminal 213 is authorized and accounted by the AAA server 220. The router 210 sends the Linux command to the AAA server 220 for authorization and accounting. The AAA server 220 receives the Linux command from the router 210 and performs authorization and accounting for the Linux command. For authorization, the AAA server 220 determines whether execution of the Linux command on the router 210 is authorized and provides to the router 210 a response indicative as to whether execution of the Linux command on the router 210 is authorized. The authorization of the Linux command entered by the user 201 via the bash terminal 213 may be based on command authorization information provided by the router 210 to the AAA server 220 for use in determining whether execution of the Linux command on the router 210 is authorized (e.g., the command, a user identifier of user 201, a user session identifier of a user session of user 201, a terminal type via which the user 201 entered the command (e.g., bash), or the like, as well as various combinations thereof). The router 210 receives the response indicative as to whether execution of the Linux command on the router 210 is authorized and initiates handling of the Linux command at the router 210 based on whether execution of the Linux command on the router 210 is authorized. The router 210, based on a response from the AAA server 220 that is indicative that the user 201 is authorized to execute a Linux command, executes the Linux command on the router 210 and may provide an indication to the user 201 via the bash terminal 213 that the Linux command was executed (e.g., a result of execution of the Linux command). The router 210, based on a response from the AAA server 220 that is indicative that the user 201 is not authorized to execute the Linux command, prevents execution of the Linux command on the router 210 and may provide an indication to the user 201 via the bash terminal 213 that the Linux command was not executed due to lack of authorization. The AAA server 220 also performs accounting for the Linux commands entered by the user 201 via the bash terminal 213 for maintaining a record of user activity on the router 210 (e.g., commands entered, commands executed after being authorized, commands not execute after authorization was denied, and so forth), which may be used for various activity tracking purposes (e.g., auditing, analysis, or the like). The router 210 also may perform accounting for the Linux commands entered by the user 201 via the bash terminal 213 for maintaining a local record of user activity on the router 210.

It will be appreciated that the router 210 and the AAA server 220 may be configured to support various other functions configured to support authorization and accounting by the AAA server 220 of Linux commands for the router 210.

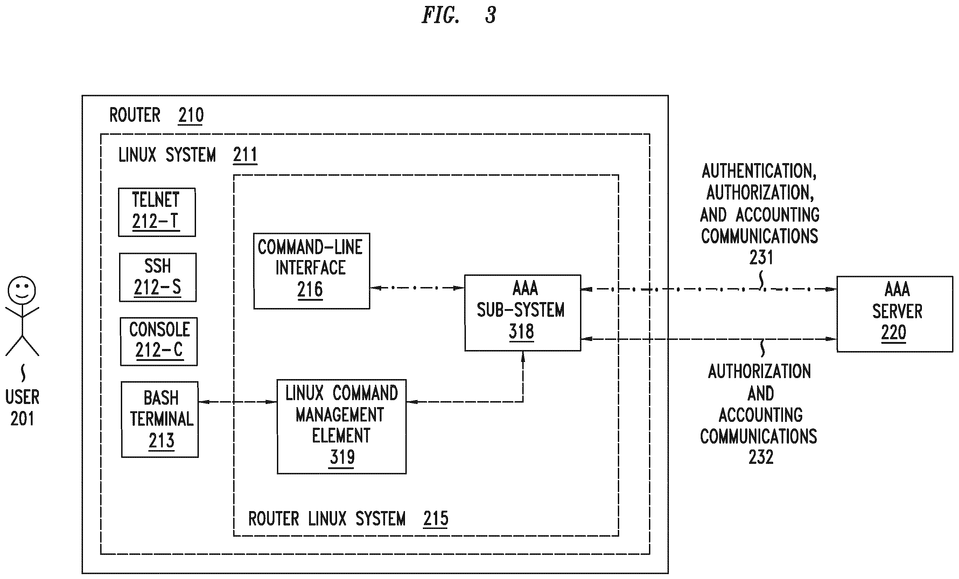

FIG. 3 depicts an example embodiment of authorization and accounting of Linux commands for a router. The example embodiment of FIG. 3 is similar to the example embodiment of FIG. 2, with the exception that an example embodiment for supporting authorization and accounting of Linux commands based on an AAA sub-system 318 and a Linux command management element 319 is presented. The AAA sub-system 318 and the Linux command management element 319 may be implemented as part of the router Linux system 215. The AAA sub-system 318 of the router Linux system 215 is configured to handle AAA communications between the router 210 and the AAA server 220, including the AAA communications 231 and the authorization and accounting communications 232. The AAA sub-system 318 is configured to interact with CLI 216 (e.g., via inter-process communications on router 210) and AAA server 220 (e.g., via a AAA protocol such as RADIUS or TACACS) for supporting AAA functions for the router Linux system 215. The Linux command management element 319is configured to perform various functions supporting authorization and accounting of Linux commands entered via bash terminal 213 when bash terminal 213 is accessed via the CLI 216 (e.g., activation of Linux command monitoring mode for user 201 when user 201 based on detection that user 201 enters the bash terminal 213 via the CLI 216, monitoring for Linux commands entered via the bash terminal 213 while Linux command monitoring mode is active for user 201, detecting and capturing Linux commands entered via bash terminal 213 and providing the Linux commands to the AAA sub-system 318 for supporting authorization and accounting for the Linux commands via interaction with AAA server 220, and so forth). It will be appreciated that, although primarily presented herein with respect to use of specific types and arrangements of elements of router Linux system 215 for supporting AAA for commands entered via the CLI 216 and for supporting authorization and accounting for Linux commands entered via bash terminal 213 when bash terminal 213 is accessed via CLI 216, various other types and arrangements of elements may be used for providing such functions.

It will be appreciated that, although primarily described with respect to embodiments of Linux command authorization and accounting using remote AAA functions, in at least some embodiments the Linux command authorization and accounting may be performed using local AAA functions provided on the router. For example, authorization of Linux commands locally at the router may be performed by the router in a manner similar to that described herein as being used by the AAA server. For example, accounting of Linux commands locally at the router may be performed by the router in a manner similar to that described herein as being used by the AAA server.

It will be appreciated that, although primarily described with respect to embodiments of Linux command authorization and accounting using a particular type of Linux terminal accessed via a CLI of the router (namely, a bash terminal), in at least some embodiments the Linux command authorization and accounting may be performed for other types of Linux terminals which may be accessed via the CLI of the router.

It will be appreciated that, although primarily presented herein with respect to supporting command handling (e.g., authorization and, optionally, accounting) for Linux commands entered via a Linux terminal (e.g., and, in particular, a bash interface), various example embodiments presented herein may be used to support command handling (e.g., authorization and, optionally, accounting) for various other types of commands which may be entered via various other types of terminals.

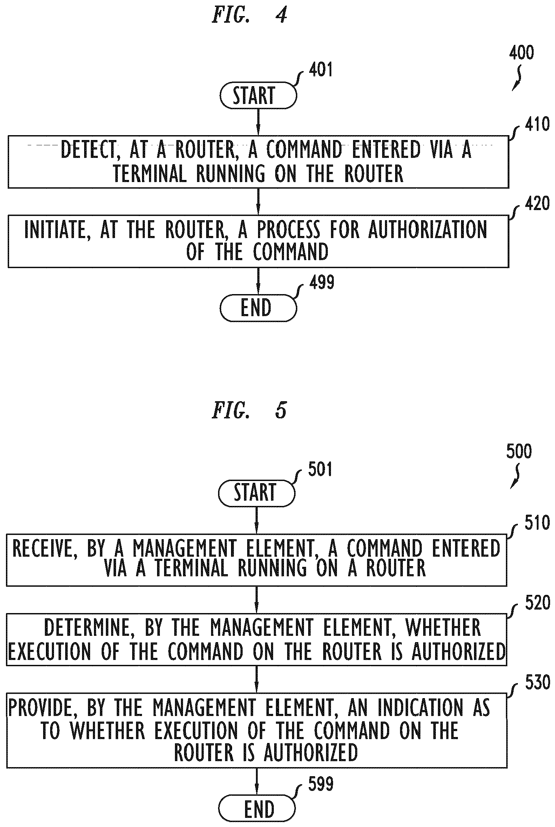

FIG. 4 depicts an example embodiment of a method for use by a router to support handling of a command entered via the router. It will be appreciated that, although primarily presented as being performed serially, at least a portion of the functions of method 400 may be performed contemporaneously or in a different order than as presented with respect to FIG. 4. At block 401, method 400 begins. At block 410, detect, at a router, a command entered via a terminal running on the router. At block 420, initiate, at the router, a process for authorization of the command. At block 499, method 400 ends. It will be appreciated that the process for authorization of the command also may be configured to support accounting of the command (e.g., a process for authorization and accounting of the command). It will be appreciated that various command authorization and accounting functions presented herein with respect to FIGs. 2 and 3 may be incorporated within the context of method 400 of FIG. 4.

FIG. 5 depicts an example embodiment of a method for use by a management element to support handling of a command entered via a router. It will be appreciated that, although primarily presented as being performed serially, at least a portion of the functions of method 500 may be performed contemporaneously or in a different order than as presented with respect to FIG. 5. At block 501, method 500 begins. At block 510, receive, by a management element, a command entered via a terminal running on a router. At block 520, determine, by the management element, whether execution of the command on the router is authorized. At block 530, provide, by the management element, an indication as to whether execution of the command on the router is authorized. At block 599, the method 500 ends. It will be appreciated that the management element may be running on the router to provide local authorization (and, optionally, accounting) of commands or may be a remote server (e.g., an AAA server based on RADIUS or TACACS) providing remote authorization (and, optionally, accounting) of commands for the router. It will be appreciated that various command authorization and accounting functions presented herein with respect to FIGs. 2 and 3 may be incorporated within the context of method 500 of FIG. 5.

Various example embodiments for supporting command handling (e.g., command authorization and, optionally, accounting) for a router may provide various advantages or potential advantages. For example, various example embodiments for supporting Linux command authorization and accounting may enable authorization and accounting of Linux commands which otherwise might not be authorized and accounted, such as enabling authorization and accounting of Linux commands entered by users even when the users enter a Linux terminal (e.g., bash) via the CLI of the router and enter the Linux commands via the Linux terminal. For example, various example embodiments for supporting Linux command authorization and accounting, by supporting authorization and accounting of Linux commands which otherwise might not be authorized and accounted, prevents situations in which, if there is a problem with a Linux command entered via a Linux terminal, the Linux command is executed and there is no way to trace what was done (and, thus, it may be quite difficult to correct any problems that may result). For example, various example embodiments for supporting Linux command authorization and accounting may enable authorization and accounting of Linux commands entered by users in a manner that is transparent to the user, thereby enabling the users to simply type within the Linux terminal and have the Linux commands transparently authorized and accounted. Various example embodiments for supporting command handling (e.g., command authorization and, optionally, accounting) for a router may provide various other advantages or potential advantages.

It will be appreciated that, although primarily presented herein with respect to supporting command handling (e.g., command authorization and, optionally, accounting) for commands executed on routers, various example embodiments presented herein may be used for command handling for commands executed on other types of devices (e.g., switches, hubs, end devices, or the like).

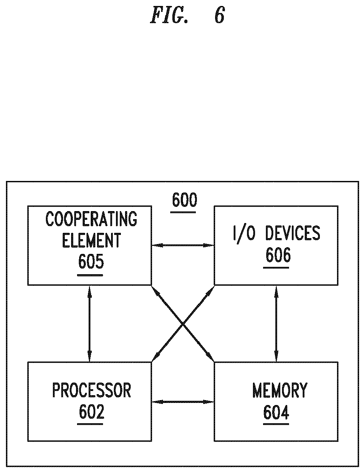

FIG. 6 depicts an example embodiment of a computer suitable for use in performing various functions presented herein.

The computer 600 includes a processor 602 (e.g., a central processing unit, a processor, a processor having a set of processor cores, a processor core of a processor, or the like) and a memory 604 (e.g., a random access memory, a read only memory, or the like). The processor 602 and the memory 604 may be communicatively connected. In at least some embodiments, the computer 600 may include at least one processor and at least one memory including computer program code, wherein the at least one memory and the computer program code are configured to, with the at least one processor, cause the computer to perform various functions presented herein.

The computer 600 also may include a cooperating element 605. The cooperating element 605 may be a hardware device. The cooperating element 605 may be a process that can be loaded into the memory 604 and executed by the processor 602 to implement various functions presented herein (in which case, for example, the cooperating element 605 (including associated data structures) can be stored on a non-transitory computer-readable storage medium, such as a storage device or other suitable type of storage element (e.g., a magnetic drive, an optical drive, or the like)).

The computer 600 also may include one or more input/output devices 606. The input/output devices 606 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 600 may represent a general architecture and functionality suitable for implementing functional elements described herein, portions of functional elements described herein, or the like, as well as various combinations thereof. For example, computer 600 may provide a general architecture and functionality that is suitable for implementing one or more elements presented herein, such as a router 112 or a portion thereof, a management element 113 or a portion thereof, a management device 120 or a portion thereof, a management element 121 or a portion thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable media), transmitted via a data stream in a broadcast or other signal bearing medium, and/or stored within a memory within a computing device operating according to the instructions.

It will be appreciated that the term "or" as used herein refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. An apparatus, comprising:
at least one processor; and
at least one memory including computer program code;
wherein the at least one memory and the computer program code are configured to, with the at least one processor, cause the apparatus to at least:
detect, at a router, a command entered via a terminal running on the router; and
initiate, at the router, a process for authorization of the command.

2. The apparatus according to claim 1, wherein the command is detected based on monitoring for the command responsive to entry of the terminal from a command-line interface of the router.

3. The apparatus according to any of claims 1 to 2, wherein the command is detected based on a terminal profile created at the router responsive to entry of the terminal from a command-line interface of the router.

4. The apparatus according to any of claims 1 to 3, wherein the at least one memory and the computer program code are configured to, with the at least one processor, cause the apparatus to at least:
activate, at the router based on entry of the terminal from a command-line interface of the router, a command monitoring mode in which the router is configured to monitor for commands.

5. The apparatus according to any of claims 1 to 4, wherein the terminal is a Linux terminal or a BASH terminal and the command is a Linux command or a system level command where the command is detected based on a command tracing function.

6. The apparatus according to any of claims 1 to 5, wherein the command does not require system level execution, wherein the command is detected based on a command tracking function.

7. The apparatus according to any of claims 1 to 6, wherein, to initiate the process for authorization of the command, the at least one memory and the computer program code are configured to, with the at least one processor, cause the apparatus to at least:
send, by the router toward a management element, in conjunction with the command for authorization of the command by the management element, at least one of a user identifier of a user which entered the command, a user session identifier of a user session via which the command was entered, a terminal type of the terminal, or one or more arguments of the command.

8. The apparatus according to claim 7, wherein, to send the command toward the management element, the at least one memory and the computer program code are configured to, with the at least one processor, cause the apparatus to at least:
provide the command to an authentication, authorization, and accounting (AAA) subsystem of the router that is configured to communicate with the management element for authorization of the command.

9. The apparatus according to any of claims 7 to 8, wherein the at least one memory and the computer program code are configured to, with the at least one processor, cause the apparatus to at least:
receive, by the router from the management element, an authorization response; and
determine, by the router based on the authorization response, whether to allow or deny execution of the command on the router.

10. The apparatus according to any of claims 7 to 9, wherein the at least one memory and the computer program code are configured to, with the at least one processor, cause the apparatus to at least:
receive, by the router from the management element, an authorization response including an indication that execution of the command on the router is authorized;
initiate, by the router based on the indication that execution of the command on the router is authorized, execution of the command on the router; and
provide, via the terminal, an indication that execution of the command on the router is complete.

11. The apparatus according to any of claims 7 to 9, wherein the at least one memory and the computer program code are configured to, with the at least one processor, cause the apparatus to at least:
receive, by the router from the management element, an authorization response including an indication that execution of the command on the router is not authorized; and
provide, via the terminal, an indication that execution of the command on the router is not authorized.

12. The apparatus according to any of claims 7 to 11, wherein the management element includes a local element of the router configured to perform authorization and accounting functions.

13. The apparatus according to any of claims 7 to 11, wherein the management element includes a remote server configured to perform command authorization and accounting functions wherein the remote server includes an authentication, authorzation and accounting (AAA) server.

14. The apparatus according to claim 13, wherein the router, for communiction with the remote server, is configured to support at least one of a Terminal Access Controller Access Control System (TACACS) protocol or a Remote Authentication Dial-In User Service (RADIUS) protocol.

15. A method, comprising:
detecting, at a router, a command entered via a terminal running on the router; and
initiating, at the router, a process for authorization of the command.
